# EUROPEAN PATENT APPLICATION

(11) **EP 2 835 406 A1**
(43) Date of publication of application: **11.02.2015**
(21) Application number: 13179686.4
(22) Date of filing: 08.08.2013
(51) Int. Cl.: C09J 123/08, C09J 123/12, C09J 123/14, C09J 153/00, C08L 53/00, C08L 23/08, C08L 23/12, C08L 23/14

(54) **Hot-melt adhesive for the collation of containers and bottles for beverages or food into shelf ready packs of various items**

(71) Applicant: IP & Patent Management UG (haftungsbeschränkt), 28205 Bremen (DE)
(72) Inventor: Schneider, Jörg, 28205 Bremen (DE)
(74) Representative: Scholz, Volker

(57) **Abstract**

A hot-melt adhesive mixture comprising: (a) Polymer component consisting of metallocene catalyzed polyolefin polymer / polyolefin elastomer based hotmelt adhesive, typically known as a ethene - 1 - octene co-polymer with a of 10 - 40 parts per weight; (b) modified polymer component in the range of 10 - 30 parts per weight with regard to the total weight of the mixture comprising at least one Styrenic block co-polymer, Ethylene Butyl Acrylate / Vinyl Acetate, catalysed Elastomers or mixtures thereof; (c) A reinforcing wax polymer component comprising of a low molecular weight polypropylene homopolymer and a polypropylene / ethylene copolymer produced by the result of a metallocene catalyst / polyolefin elastomer based hotmelt adhesive, typically 15 to 40% per weight with regard to the total weight of the mixture; d) A stabilizer component in the range of 0.05 - 1.5 % comprising of Steric hindered phenolic antioxidant and Hindered amine light stabilizer; e) a plasticizer component in the range of 12 to 30 parts, comprising of paraffinic or naphtenic oils, Polybutene or dibasic esters and / or Polyols.

## Description

### 1) Field of the invention

Hot-melt adhesives are widely used for various commercial and industrial applications such as product assembly and packaging. Such hot-melt adhesives are applied to a substrate while in its molten state and cooled to harden the adhesive layer.

### 2) Background of the invention

Traditionally the formation of multiple containers for beverages or food to form a pack of various items (in the following abbreviated in "multipack") has only been possible by the employment of a shrink sleeve film, cardboard outer wrap or a mechanical locking / holding arrangement.

There are inherent problems with the shrink sleeve multipack arrangement in that the individual containers are difficult to remove. Often sharp tools are used to open the secondary packaging with the result that without purpose the product containers are damaged. The cardboard overwrap can also be problematic as the construction can be unstable, particularly with heavier shaped containers.

Both methods (shrink sleeve and cardboard) or other secondary packaging involve the use of packaging materials in addition to the beverage or food container, leading to higher levels of packaging waste.

Current commercial hot-melt adhesive formulations do not provide the necessary performance characteristics necessary for application.

To fulfill this function, the adhesive must display a very high level of cohesive strength, heat resistance and provide good levels of adhesion to the container in transit and storage in a wide variety of ambient conditions. But when the multipack reaches the consumer, the individual containers have to be relatively easy to be separated allowing individual consumption of the contents of the containers.

The adhesive mixture herein mentioned has been carefully designed and constructed to provide sufficient durability and adhesion to hold the containers together until the consumer desires separation. The adhesive mixture has to have sufficient adhesion to the substrates to hold the containers together in a broad range of ambient conditions, including high and low temperatures, high and low humidity and environments with high UV exposure. The adhesive mixture must also have sufficient flexibility to allow expansion in the adhesive joint as the container expands and contracts during its exposure to the different prevailing environmental conditions.

The adhesive must be able to be applied easily in a high speed automated process, concurrent with a modern high speed beverage or food filling or processing line / machine.

### 3) Detailed description of the invention

All documents cited herein are incorporated in their entireties by reference.

The object to be solved by the present invention is to provide adhesive mixtures for adhering containers, such as PET-bottles, cans or glass bottles having sufficient durability and adhesion to hold the container together until the consumer desires separation.

The adhesive mixture has to have sufficient adhesion to the substrates to hold the containers together in a broad range of ambient conditions, including high and low temperatures high and low humidity and environments with high UV exposure. The adhesive mixture must also have sufficient flexibility to allow expansion in the adhesive joint as the container expands and contracts during its exposure to the different prevailing environmental conditions. Further, a hot-melt adhesive mixture for use in the temporary bonding, attachment and collation of multiple containers for beverages or food to form a pack of various items in an automated application process, without the use of secondary / external packaging, overcoming drawbacks of the prior art shall be provided.

The purpose of this invention is to provide the multipack arrangement but greatly reducing the amount of packaging material used in the formation.

The problem has been solved by a hot-melt adhesive mixture comprising:
(a) A polymer component consisting of metallocene catalyzed polyolefin polymer / polyolefin elastomer based hotmelt adhesive, typically known as a ethene - 1 - octene co-polymer with a of 10 - 40 parts per weight
(b) A modified polymer component in the range of 15 - 36 parts per weight with regard to the total weight of the mixture comprising at least one Styrenic block co-polymer, Ethylene Butyl Acrylate / Vinyl Acetate, catalysed Elastomers or mixtures thereof.
(c) A reinforcing wax polymer component typically 15 to 40% by weight comprising of a low molecular weight polypropylene homopolymer and a polypropylene / ethylene copolymer produced by the result of a metallocene catalyst / polyolefin elastomer based hotmelt adhesive.
d) A stabilizer component in the range of 0.05 - 1.5 parts per weight with regard to the total weight of the mixture comprising steric hindered phenolic antioxidant and/or Hindered amine light stabilizer.
e) A plasticizer component in the range of 12 to 30% comprising of paraffinic or naphtenic oils, Polybutene or dibasic esters and / or Polyols.

The problem further has been solved by a hot-melt adhesive compound having a density of between 0.790 - 1.2 g/cm³, a melt flow index of 15 - 4000 g/min (@200°C), a Brookfield viscosity of 160°C between 200 and 15,000 cPs, a shore hardness in the range of 15 and 70A at 23°C according to ASTM D2240, a softening point determined by ASTM E28 above 40°C and not greater than 158°C.

Preferably, the hot-melt adhesive compound is obtainable from the inventive hot-melt adhesive mixture.

More preferably, the hot-melt adhesive compound is obtainable by blending.

Most preferably, the inventive hot-melt adhesive mixture and/or the inventive hot-melt adhesive compound have a relatively flat elastic modulus from -20°C to 50°C, extremely good heat stability, Tg of about -32°C, fogging temperature above 100°C, low volatiles content over 0,10% after two hours at 110°C or mixtures thereof.

In a preferred embodiment, the inventive hot-melt adhesive mixture and/or the inventive hotmelt adhesive compound having a high level of cohesive strength, heat resistance, good adhesion to the preferably beverage and/or food containers in transit and storage in a wide variety of ambient conditions. At the same time, when the multipack reaches the consumers the hotmelt adhesive specific properties enables the consumers to separate easily the containers allowing individual consumption of the contents of the containers.

The object has also been solved by use of an inventive hot-melt adhesive mixture according to claim 1 and/or the hot-melt adhesive compound for adhering multiple containers for beverages or food to form a pack of various items in an automated application process, without the use of secondary / external packaging.

Surprisingly it was found that the inventive mixtures and compounds have the advantage of greatly reducing the amount of packaging in a multipack construction while providing a stable multipack which is easily separated by the consumer.

The problem is solved by a hot-melt adhesive mixture to adhere multiple containers for beverages or food to form a pack of various items in an automated application process, without the use of secondary / external packaging comprising of:
(a) Polymer component consisting of metallocene catalyzed polyolefin polymer / polyolefin elastomer based hot-melt adhesive, typically known as a ethene - 1 - octene co-polymer with a of 10 - 40 parts per weight
(b) modified polymer component in the range of 15 - 30 parts per weight with regard to the total weight of the mixture comprising at least one Styrenic block co-polymer, Ethylene Butyl Acrylate / Vinyl Acetate, catalysed Elastomers or mixtures thereof.
(c) A reinforcing wax polymer component typically 15 to 40% by weight comprising of a low molecular weight polypropylene homopolymer and a polypropylene / ethylene copolymer produced by the result of a metallocene catalyst / polyolefin elastomer based hotmelt adhesive.
d) A stabilizer component in the range of 0.05 - 1.5 % comprising of Steric hindered phenolic antioxidant and Hindered amine light stabilizer.
e) A plasticizer component in the range of 12 to 30% comprising of paraffinic or naphtenic oils, Polybutene or dibasic esters and / or Polyols.

The resulting compound from the blending of the above mentioned parts a, b, c, and d together, results to form a hot-melt adhesive compound having the following physical characteristics: a density of between 0.790 - 1.2 g/cm3 a melt flow index of 15 - 4000 g/min (@200°C). A Brookfield viscosity @160°C) between 200 and 15,000 cPs. The shore hardness of the mixture will be in the range of 15 and 70A at 23°C according to ASTM D2240. The compound will also have a softening point determined by ASTM E28 above 40°C and not greater than 158°C.

The hot-melt adhesive of the present invention preferably provides a relatively flat elastic modulus from -20°C to 50°C, extremely good heat stability, Tg of about -32°C, fogging temperature above 100°C, and low volatiles content over 0,10% after two hours at 110°C.

The adhesive provides a high level of cohesive strength, heat resistance and good adhesion to the (beverage or food) containers in transit and storage in a wide variety of ambient conditions. At the same time, when the multipack reaches the consumers the hot-melt adhesive specific properties enables the consumers to separate easily the containers allowing individual consumption of the contents of the containers.

The invention mentioned herein is a mixture of:
a) polymer component consisting of metallocene catalyzed polyolefin polymer / polyolefin elastomer based hotmelt adhesive, typically known as a ethene - 1 - octene co-polymer CAS number 26221-73-8 which has a ring & ball softening point from 55°C to 150 °C, and will typically have a viscosity at 350 °F (177 °C) as measured using a Brookfield viscometer, of no more than 13000 cPs (20 grams/cm second). A commercially known example of this product is Dow Affinity series POP polymers with a polymer content of 10 - 30 parts per weight
b) modifying polymers / rubbers comprising of a blend of A-B-A hydrogenated styrene butadiene co-polymers CAS number 66070-58-4. A commercially known example of this product is the Kraton G series of polymers
c) a reinforcing polymer / wax component, typically this is a blend of a low molecular weight polypropylene homopolymer, CAS numer 9003-07-0 and a polypropylene - ethylene copolymer, CAS number 9010-79-1. These polymers are synthesized using a metallocene catalyst / polyolefin elastomer based hotmelt adhesive commercially known examples are licocene or tafmer.
d) a stabilizer component of steric hindered phenolic antioxidant and hindered amine light stabilizer, a commercially known example of this product is irganox 1010, CAS number 6683-19-8.
e) A plasticizer component in the range of 12 to 30% comprising of paraffinic or naphtenic oils, Polybutene or dibasic esters and / or Polyols, CAS number 8042-47-5.

By common knowledge this mixture is referred to as a hot-melt adhesive.

The unique properties of the invention are provided by the specific interaction between the specific components herein mentioned.

The invention is a mixture of:
The use of A-B-A hydrogenated styrene butadiene block co-polymer in combination with the metallocene catalyzed olefin co-polymer / polyolefin elastomer based hotmelt adhesive and
the reinforcing polymer wax blend gives the specific desired properties for the adhesive mixture.

Alone the metallocene catalyzed olefin / polyolefin elastomer based hotmelt adhesive does not have sufficient tensile strength and elasticity to fulfill the application at the range of temperatures desired.

Therefore, it was decided to add on the A-B-A hydrogenated styrene butadiene block copolymer in order to enhance the tensile strength and elasticity of the adhesive. It is especially innovative the usage of Kraton G in combination with metallocene / polyolefin elastomer based hotmelt adhesive as it is very compatible due to the saturated mid block content.

This component of the mixture also acts to reduce the adhesion of the hot-melt to the container allowing the containers to be separated when desired.

The use of the polymer wax component provides sufficient tensile and cohesive strength over the wide range of temperatures needed to fulfill the requirements of the application. The use of the polypropylene homopolymer CAS number 9003-07-0 also acts as a nucleating agent throughout the polymer system ensuring the correct rate of crystallization ensues, thus ensuring the correct setting speed of the adhesive mixture.

Also the novelty of the invention is related to the usage of a considerable percentage of metallocene catalyzed polyolefin polymer / polyolefin elastomer based hotmelt adhesive as this product has high green strength (high tack), rapid set during compression cycle and very stable viscosity.

The clear advantage of allowing increased mileage (lower consumption of hot-melt in comparison with other hot-melts is a clear benefit).

However, the major breakthrough is the interaction of the four components as the a) modified polymer / rubber is providing the elasticity and the tensile strength, whilst the b) reinforcing polymer / wax blend is providing sufficient cohesive strength across the temperature range needed to fulfill the application, c) the metallocene catalyzed olefin / polyolefin elastomer based hotmelt adhesive is providing adhesion and d) the plasticizer is acting as a softener of the block co polymer.

The present invention provides a hot-melt adhesive composition useful for this particular application. Due to the requirements of usage in the changing environments encountered, the hot-melt of the present invention preferably provides a relatively flat elastic module from -20 °C to + 50 °C, viscosity at 160 °C of about 700 - 4000 mPas, extremely good heat stability, Tg of about -32 °C, fogging temperature >100@C, and a low volatiles content of < 0,10% after two hours at 110 °C.

Formula:

| Formula: | |
|---|---|
| (a)polymer component: | Metallocene catalyzed olefin: 10 - 30% CAS 26221-73-8 |
| (b)modified polymer / rubber: | Kraton G: 10 - 25 % CAS 66070-58-4 |
| (c)modified Polymer / wax blend: | 15 - 40 % CAS 9003-07-0 and CAS 9010-79-1 |
| (d)Stabilizer: | 0.5 - 1.5% CAS 6683-19-8 |

| | |
|---|---|
| (e)Plasticizer | 12 - 40% CAS 8042-47-5 |

Due to the nature of the application each named component may be comprised of a singular component or a blend of components in order to achieve the desired properties. The ratio of each particular component are as follows:
(a) polymer segment 10 - 30 % by weight,
(b) modified polymer / rubber component 10 - 25% by weight,
(c) modified Polymer / Wax blend 15 - 40% by weight,
(d) Stabilizer component 0.05 % -1.5 % by weight,
e) Plasticizer 12 - 40% by weight.

The homogenous mixture of these components will have a density of between 0.790 - 1.2 g/cm³ a melt flow index of 15 - 4000 g/min (@160°C). A Brookfield viscosity @160°C between 200 and 15,000 cPs. The shore hardness of the mixture will be in the range of 15 and 70A at 23°C.

The adhesive blend can be made in a heated mixing vessel of the planetary type, z blade or ribbon type. Heat must be applied to the walls of the vessel evenly to avoid thermal degradation during processing. Processing temperature is in the 100 - 160°C range. A vacuum should be applied during the blending process to avoid the incorporation of air. The mixture can also be prepared using a single screw or twin screw extruder with a heated barrel using moderate shear rates.

The unique properties of the invention are provided by the specific interaction between the specific components herein mentioned.

The invention is a mixture of: (a) metallocene catalyzed olefin polymer component consisting of metallocene catalyzed polyolefin polymer / polyolefin elastomer based hotmelt adhesive, typically known as a ethene - 1 - octene co-polymer CAS number 26221-73-8 which has a ring & ball softening point from 55°C to 150 °C, and will typically have a viscosity at 350 °F (177 °C) as measured using a Brookfield viscometer, of no more than 13000 cPs (20 grams/cm second). A commercially known example of this product is Dow Affinity series POP polymers; (b) polymers comprising of a blend of A-B-A Hydrogenated Styrene / butadiene co-polymers, a commercially known example of this product is the Kraton G series of polymers, (c) a reinforcing polymer / wax component, typically this is a blend of a low molecular weight polypropylene homopolymer, CAS numer 9003-07-0 and a polypropylene-ethylene co-polymer, CAS number 9010-79-1. These polymers are synthesized using a metallocene catalyst / polyolefin elastomer based hotmelt adhesive commercially known examples are licocene or tafmer. (d) a stabilizing component comprising of steric hindered phenolic antioxidant and hindered amine light stabilizer, e) A plasticizer component comprising of paraffinic or naphtenic oils, Polybutene or dibasic esters and / or Polyols.

By common knowledge this mixture is referred to as a hotmelt adhesive.

The use of A-B-A hydrogenated styrene butadiene block co-polymer in combination with the metallocene catalyzed olefin co-polymer / polyolefin elastomer based hotmelt adhesive and the reinforcing polymer wax blend gives the specific desired properties for the adhesive mixture.

Alone the metallocene catalyzed olefin / polyolefin elastomer based hotmelt adhesive does not have sufficient tensile strength and elasticity to fulfill the application at the range of temperatures desired.

Therefore, it was decided to add on the A-B-A hydrogenated styrene butadiene block copolymer in order to enhance the tensile strength and elasticity of the adhesive. It is especially innovative the usage of Kraton G in combination with metallocene / polyolefin elastomer based hotmelt adhesive as it is very compatible due to the saturated mid block content.

This component of the mixture also acts to reduce the adhesion of the hot-melt to the container allowing the containers to be separated when desired.

The use of the polymer wax component provides sufficient tensile and cohesive strength over the wide range of temperatures needed to fulfill the requirements of the application. The use of the polypropylene homopolymer CAS number 9003-07-0 also acts as a nucleating agent throughout the polymer system ensuring the correct rate of crystallization ensues, thus ensuring the correct setting speed of the adhesive mixture.

Also the novelty of the invention is related to the usage of a considerable percentage of metallocene catalyzed polyolefin polymer / polyolefin elastomer based hotmelt adhesive as this product has high green strength (high tack), rapid set during compression cycle and very stable viscosity.

The clear advantage of allowing increased mileage (lower consumption of hot-melt in comparison with other hot-melts is a clear benefit).

However, the major breakthrough is the interaction of the four components as the a) modified polymer / rubber is providing the elasticity and the tensile strength, whilst the b) reinforcing polymer / wax blend is providing sufficient cohesive strength across the temperature range needed to fulfill the application, c) the metallocene catalyzed olefin / polyolefin elastomer based hotmelt adhesive is providing adhesion and d) the plasticizer is acting as a softener of the block co polymer.

The clear advantage of allowing increased mileage (lower consumption of hot-melt in comparison with other hot-melts is a clear benefit.

However, the major breakthrough is the interaction of the three components as the modified polymer / rubber is providing the elasticity and the tensile strength, whilst the wax is adjusting viscosity.

This invention relates to the use of a hot-melt adhesive mixture for the temporary bonding, attachment and collation of multiple containers for beverages or food to form a pack of various items in an automated application process, without the use of secondary / external packaging.

A hot-melt adhesive mixture for the joining and collation of multiple containers for beverages or food to form a pack without the use of a shrink sleeve film, cardboard or any other secondary or external packaging.

The hot-melt adhesive mixture comprises of:
(a) Polymer component consisting of metallocene catalyzed polyolefin polymer / polyolefin elastomer based hotmelt adhesive, typically known as a ethene - 1 - octene co-polymer with a of 10 - 40 parts per weight
(b) modified polymer component in the range of 10 - 30 parts per weight with regard to the total weight of the mixture comprising at least one Styrenic block co-polymer, Ethylene Butyl Acrylate / Vinyl Acetate, catalysed Elastomers or mixtures thereof.
(c) a reinforcing polymer / wax component, typically this is a blend of a low molecular weight polypropylene homopolymer, and a polypropylene - ethylene co-polymer. These polymers are synthesized using a metallocene catalyst / polyolefin elastomer based hotmelt adhesive commercially known examples are licocene or tafmer.
d) A stabilizer component in the range of 0.05 - 1.5 % comprising of Steric hindered phenolic antioxidant and Hindered amine light stabilizer.
e) A plasticizer component in the range of 12 to 30% comprising of paraffinic or naphtenic oils, Polybutene or dibasic esters and / or Polyols.

The adhesive is applied directly or indirectly to the container by means of automatic jet, wheel or any other appropriate method.

The adhesive mixture has a softening point determined by ASTM E28 above 40°C and not greater than 158°C, a melt flow index of 15 - 4000 g/min (@200°C). A Brookfield viscosity @160°C between 200 and 10,000 cPs A shore hardness determined by ASTM D2240 of between 15 and 70 A.

Upon reaching the consumer the containers can be separated from each other prior to use. The adhesive on the container surface can be removed by mechanical means to aid recycling.

The formulation is containing the following substances:

| | CAS number | Approximate content |
|---|---|---|
| 1. polymer component: | CAS 26221-73-8 | 10 % - 40% |
| 2. modified polymer / rubber: | CAS 66070-58-4 | 10 % - 30 % |
| 3. modified Polymer / wax blend: | CAS 9003-07-0 and CAS 9010-79-115 | - 40 % |
| 4. Antioxidant: | CAS 6683-19-8 | 0,5 % - 1,5% |
| 5. Plasticizer | CAS 8042-47-5 | 12% - 30% |

The features disclosed in the foregoing description and/or in the claims may, both separately and in any combination thereof, be material for realizing the invention in diverse forms thereof.

## Claims

1. A hot-melt adhesive mixture comprising:
(a) Polymer component consisting of metallocene catalyzed polyolefin polymer / polyolefin elastomer based hotmelt adhesive, typically known as a ethene - 1 - octene co-polymer with a of 10 - 40 parts per weight
(b) modified polymer component in the range of 10 - 30 parts per weight with regard to the total weight of the mixture comprising at least one Styrenic block co-polymer, Ethylene Butyl Acrylate / Vinyl Acetate, catalysed Elastomers or mixtures thereof.
(c) a reinforcing polymer / wax component, typically this is a blend of a low molecular weight polypropylene homopolymer, and a polypropylene - ethylene co-polymer, in the range of 10 to 40 parts. These polymers are synthesized using a metallocene catalyst / polyolefin elastomer based hotmelt adhesive commercially known examples are licocene or tafmer.
d) A stabilizer component in the range of 0.05 - 1.5 % comprising of Steric hindered phenolic antioxidant and Hindered amine light stabilizer.
e) A plasticizer component in the range of 12 to 30 parts, comprising of paraffinic or naphtenic oils, Polybutene or dibasic esters and / or Polyols.

2. The hot-melt adhesive compound obtainable from the hot-melt adhesive mixture of claim 1.

3. Hot-melt adhesive compound according to claim 2, having a density of between 0.790 - 1.2 g/cm³, a melt flow index of 15 - 4000 g/min (@200°C), a Brookfield viscosity at 160°C between 200 and 10,000 cPs, a shore hardness in the range of 15 and 70A at 23°C according to ASTM D2240, a softening point determined by ASTM E28 above 40°C and not greater than 158°C.

4. The hot-melt adhesive compound of claim 2 or 3 obtainable by blending.

5. The hot-melt adhesive mixture of claim 1 and/or the hot-melt adhesive compound of claim 2 to 4 having a relatively flat elastic modulus from -20°C to 50°C, extremely good heat stability, Tg of about -32°C, fogging temperature above 100°C, low volatiles content over 0,10% after two hours at 110°C or mixtures thereof.

6. The hot-melt adhesive mixture of claim 1 and/or the hot-melt adhesive compound according to any of the claims 2 to 4 having a high level of cohesive strength, heat resistance, good adhesion to, preferably beverage and/or food, containers in transit and storage in a wide variety of ambient conditions.

7. Use of the hot-melt adhesive mixture according to claim 1 and/or the hot-melt adhesive compound according to any of the claims 2 to 4 for adhering multiple containers for beverages or food to form a pack of various items in an automated application process, without the use of secondary / external packaging.
